# EUROPÄISCHE PATENTSCHRIFT

(11) **EP 2 288 825 B1**
(45) Veröffentlichungstag und Bekanntmachung des Hinweises auf die Patenterteilung: **19.09.2012**
(21) Anmeldenummer: 09765691.2
(22) Anmeldetag: 14.05.2009
(51) Int. Cl.: F16H 63/20, F16H 63/38, F16H 57/027

(54) **SCHALTDOMGEHÄUSE SOWIE SCHALTDOM MIT DEM SCHALTDOMGEHÄUSE**
GEARSHIFT DOME HOUSING AND GEARSHIFT DOME COMPRISING THE GEARSHIFT DOME HOUSING
BOÎTIER DE DÔME DE CHANGEMENT DE VITESSES ET DÔME DE CHANGEMENT DE VITESSES COMPORTANT CE BOÎTIER

(30) Priorität: 19.06.2008 DE 102008029266
(43) Veröffentlichungstag der Anmeldung: 02.03.2011
(73) Patentinhaber: Schaeffler Technologies AG & Co. KG, 91074 Herzogenaurach (DE)
(72) Erfinder: MAIER, Waldemar, 91074 Herzogenaurach (DE)
(86) Internationale Anmeldenummer: PCT/EP2009/055865
(87) Internationale Veröffentlichungsnummer: WO 2009/153111

(56) Entgegenhaltungen:
- DE-B- 1 245 759
- DE-U1- 29 923 146
- GB-A- 1 572 317
- US-A- 1 742 749

## Beschreibung

### Gebiet der Erfindung

Die Erfindung betrifft ein Schaltdomgehäuse zur Abdeckung und/oder Aufnahme eines Schaltmechanismus für ein Getriebe mit einer Lageranordnung zur Lagerung einer Schaltwelle, so dass die Schaltwelle in dem Schaltdomgehäuse längsverschiebbar und schwenkbar gelagert ist, mit einer Kopplungsöffnung zur Verbindung mit einem Gehäuse, insbesondere einem Getriebegehäuse, wobei die Längserstreckung der Schaltwelle zur Flächenerstreckung der Kopplungsöffnung gleichgerichtet ist und wobei das Schaltdomgehäuse einen ersten und einen zweiten Kammerbereich aufweist, in die sich die Schaltwelle erstreckt. Die Erfindung betrifft im Weiteren einen Schaltdom mit dem Schaltdomgehäuse.

Die Übertragung von Schalt- bzw. Wählbewegungen in einem Fahrzeug erfolgt oftmals über eine Schaltwelle, welche eine mechanische Umsetzung von Schalt- bzw. Wählbewegungen eines Fahrers oder eines Aktors in eine Lageänderung von Schaltschienen oder ähnlichen Mitnehmerelementen umsetzt. Die Schaltschienen steuern ein nachgeschaltetes Getriebe, insbesondere ein Zahnräderwechselgetriebe oder Schaltgetriebe, so dass bei der Lageänderung der Schaltschienen ein Gang in dem Getriebe gewechselt wird. In vielen Bauformen ist die Schaltwelle längs verschiebbar und um ihre eigene Achse verschwenkbar gelagert, wobei eine Wählbewegung durch eine Längsverschiebung der Schaltwelle und eine Schaltbewegung durch eine Verschwenkung der Schaltwelle umgesetzt wird.

Ein derartiger Aufbau ist beispielsweise in der Offenlegungsschrift DE 10 316 440 A1 gezeigt, welche einen Schaltmechanismus zum Durchführen von Schaltungen betrifft. Aus der Figur 35 ergibt sich ein Aufbau, bei dem eine Schaltwelle schwenkbar und axial verschiebbar in eine Aufnahme gelagert ist, wobei die Schaltwelle über einen Aktor bewegbar ist.

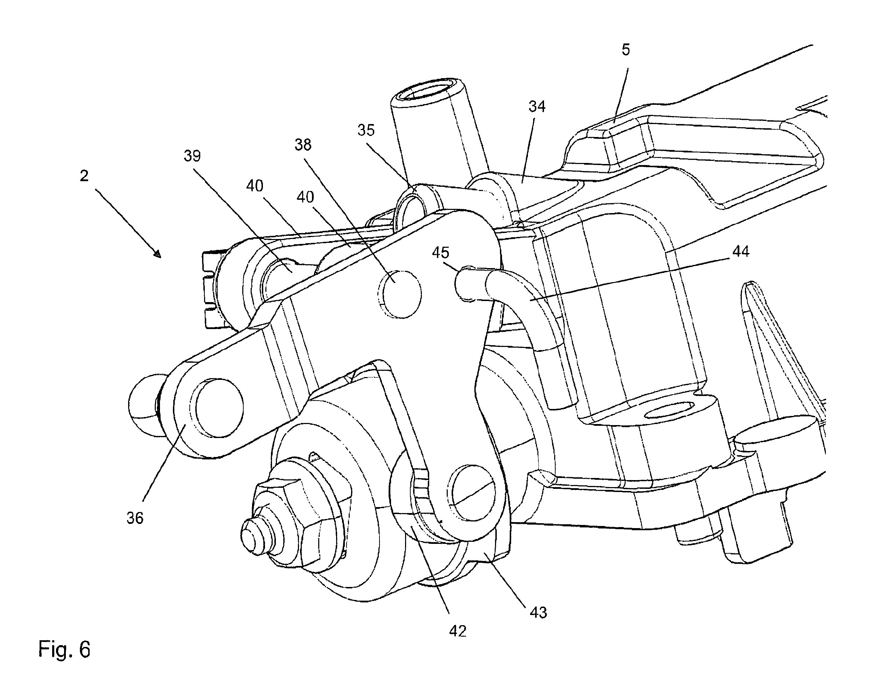

Die Druckschrift DE 299 231 46 U1 betrifft eine Schaltvorrichtung für ein Wechselgetriebe von Fahrzeugen, welche eine Schaltwelle umfasst, die in einem Getriebegehäuse eines mechanisch schaltbaren Schalträderwechselgetriebes angeordnet ist und über Lager axial verschiebbar und schwenkbar geführt ist. Gemäß der Figur 6 ist das Getriebegehäuse teilbar ausgeführt, so dass der obere Teil als ein Schaltdomgehäuse bezeichnet werden kann.

DE 1 245 759 A1 das alle Merkmale des Oberbegriffs des Anspruchs 1 offenbart , US 1 742 749 A1 und GB 1 572 317 A1, zeigen weitere Schaltdomgehäuse zur Lagerung einer Schaltwelle, die allerdings ungleichmäßige Wandstärken aufweisen.

Der Erfindung liegt die Aufgabe zu Grunde, ein Schaltdomgehäuse beziehungsweise einen Schaltdom mit dem Schaltdomgehäuse vorzuschlagen, welches fertigungstechnisch vorteilhaft ausgebildet ist und/oder kostengünstig herstellbar ist.

Diese Aufgabe wird durch ein Schaltdomgehäuse mit den Merkmalen des Anspruchs 1 sowie mit einem Schaltdom mit den Merkmalen des Anspruchs 7 gelöst. Bevorzugte oder vorteilhafte Ausführungsformen der Erfindung ergeben sich aus den Unteransprüchen, der nachfolgenden Beschreibung sowie den beigefügten Figuren.

Erfindungsgemäß wird ein Schaltdomgehäuse zur Abdeckung und/oder Aufnahme eines Schaltmechanismus für ein Getriebe vorgeschlagen. Das Schaltdomgehäuse bezeichnet bevorzugt ein separates Gehäuse, welches eine Schaltwelle aufnimmt und diesen Teil eines Schaltmechanismus beziehungsweise weitere Teile des Schaltmechanismus abdeckt. Das Schaltdomgehäuse beziehungsweise der Schaltmechanismus ist zur Verwendung für ein Getriebe, insbesondere für ein Zahnräderwechselgetriebe, Gangwechselgetriebe oder Wechselgetriebe z.B. in Automatik, Halbautomatik oder Manuell-Bauweise realisiert.

Zur Lagerung der Schaltwelle weist das Schaltdomgehäuse eine Lageranordnung auf und/oder ist mit dieser gekoppelt, so dass die Schaltwelle in dem Schaltdomgehäuse längs verschiebbar und schwenkbar gelagert ist.

Zur Ankopplung des Schaltdomgehäuses an ein Gehäuse, zum Beispiel an ein Getriebegehäuse, ist eine Kopplungsöffnung vorgesehen, wobei die Längserstreckung der Schaltwelle gleich, insbesondere parallel zur Flächenerstreckung der Kopplungsöffnung ausgerichtet ist. Insbesondere wird ein Schaltdomgehäuse vorgeschlagen, bei dem die Schaltwelle liegend und/oder aufgesetzt auf das Gehäuse und nicht stechend bzw. stehend auf- und/oder eingesetzt wird.

Das Schaltdomgehäuse weist mindestens oder genau einen ersten und einen zweiten Kammerbereich auf, in die sich die Schaltwelle erstreckt. Die Schaltwelle greift somit in den ersten beziehungsweise zweiten Kammerbereich und/oder greift durch den ersten beziehungsweise den zweiten Kammerbereich durch.

Im Rahmen der Erfindung wird vorgeschlagen, dass zwischen dem ersten und dem zweiten Kammerbereich eine erste Lagereinrichtung als Teil der Lageranordnung positioniert ist, welche zur Lagerung der Schaltwelle ausgebildet ist.

Eine Überlegung der Erfindung ist es, dass durch eine mittige Lagerung oder zumindest Teillagerung der Schaltwelle neue Konzepte für den Zusammenbau beziehungsweise das Design des Schaltdoms bzw. des Schaltdomgehäuses ermöglicht werden. Weitere Vorteile können sich insbesondere bei bevorzugten Ausführungsformen dadurch ergeben, dass das Schaltdomgehäuse nur auf einer Seite eine Durchgangsöffnung für die Schaltwelle aufweist, die gegenüberliegende Seite jedoch durch eine Wand des Schaltdomgehäuses geschlossen ausgebildet ist. Die resultierenden Vorteile liegen in einer besseren Dichtheit des Schaltdomgehäuses und kann auch zu Fertigungsvorteilen führen.

Eine innere Lageraufnahme für die erste Lagereinrichtung und/oder die erste Lagereinrichtung selbst ist einstückig an beziehungsweise in dem Schaltdomgehäuse angeformt. Bei der Ausführung mit einer inneren Lageraufnahme für die erste Lagereinrichtung ist beispielsweise eine Aufnahme für ein Gleitlager oder ein Wälzlager in das Schaltdomgehäuse eingebracht. Als eine mögliche Alternative wird die Schaltwelle unmittelbar von dem Grundmaterial des Schaltdomgehäuses gelagert, so dass die erste Lagereinrichtung einstückig an dem Schaltdomgehäuse ausgebildet ist.

Die innere Lageraufnahme oder die erste Lagereinrichtung ist als eine erste Durchgangsöffnung in einem Teilabschnitt des Schaltdomgehäuses eingebracht.

Der Teilabschnitt ist als ein Steg beziehungsweise eine Stegkonstruktion ausgebildet, welche den ersten und den zweiten Kammerbereich voneinander abteilt oder trennt. Die Trennung ist nicht unbedingt als strömungstechnische Trennung zu verstehen, sondern eher als eine räumliche Abteilung der zwei Kammerbereiche. Aus fertigungstechnischen Gründen ist es bevorzugt, dass der Steg an der Innenseite des Schaltdomgehäuses in einem Anformbereich angeformt ist. Auf diese Weise kann der Steg kostengünstig gemeinsam bzw. einstückig mit Schaltdomgehäuse gefertigt werden.

Das Schaltdomgehäuse mit den Lageraufnahmen bzw. den Lagern ist als ein einstückiges Aluminiumdruckgussteil ausgebildet. Bei dieser Ausführung kann durch einen einzigen Aluminiumdruckguss ein Schaltdomgehäuse mit einer Vielzahl von Funktionen - wie nachfolgend noch ausgeführt wird - geschaffen werden.

Die Außenseite des Schaltdomgehäuses weist zwei Kuppeln korrespondierend zu den beiden Kammerbereichen auf, welche durch einen Einschnürbereich voneinander getrennt sind. Der Einschnürbereich ist gegenüberliegend zu dem Anformbereich angeordnet. Gemäß der Erfindung sind die Wandungen der Kuppeln in einer einheitlichen Wandstärke ausgebildet. Dadurch wird sichergestellt, dass eine Lunkerbildung oder eine Verformung während des Druckgussvorgangs minimiert oder ausgeschlossen ist. Optional kann zwischen den Kuppeln eine Stützkonstruktion, zum Beispiel ein Stützsteg, vorgesehen sein.

Bei alternativen Ausführungsformen ist das Schaltdomgehäuse aus Kunststoff und/oder als Kunststoffspritzgussteil ausgebildet. Als Kunststoff kommt beispielsweise ein glasfaserverstärkter Kunststoff, insbesondere mit einem Glasfaseranteil von ca. 25%, und/oder Polyamid zum Einsatz.

Bei einer möglichen Ausführungsform umfasst die Lageranordnung eine zweite Lagereinrichtung, wobei die zweite Lagereinrichtung oder eine äußere Lageraufnahme für die zweite Lagereinrichtung eine zweite Durchgangsöffnung umfasst, welche vorzugsweise in einer Außenwandung des Schaltdomgehäuses angeordnet ist. Analog wie bei der ersten Lagereinrichtung kann die Lagerung über eingesetzte Wälz- oder Gleitlager bzw. über das Grundmaterial des Schaltdomgehäuses erfolgen. Durch die zweite Durchgangsöffnung wird einer der Kammerbereiche mit der Außenseite strömungstechnisch kommunizierend verbunden.

Die innere und die äußere Lageraufnahme werden bevorzugt in einem gemeinsamen Arbeitsgang, zum Beispiel durch einen Stufenbohrer, in das Schaltdomgehäuse eingebracht.

Besonders bevorzugt ist es, wenn die Lageranordnung zur Lagerung der Schaltwelle ausschließlich oder maßgeblich durch die erste und die zweite Lagereinrichtung gebildet wird. Die Funktionen der Längslagerung und der Schwenklagerung wird folglich durch die erste und die zweite Lagereinrichtung umgesetzt, weitere Lagereinrichtungen sind nicht vorgesehen, jedoch können eine Mehrzahl von weiteren Kontaktpunkten zwischen der Schaltwelle und dem Schaltdomgehäuse aufgrund von weiteren Funktionskomponenten vorgesehen sein.

Als weiteren Funktionsabschnitt kann das Schaltdomgehäuse optional eine Entlüftungseinrichtung, welche zur Entlüftung des Schaltdominnenraums ausgebildet ist, aufweisen. Die Entlüftungseinrichtung umfasst einen Entlüftungskanal, dessen Entlüftungsrichtung einen Winkel zwischen 10° und 40°, vorzugsweise zwischen 20° und 30° zu der Schaltwelle einnimmt. Diese Ausbildung hat den Vorteil, dass bei einem Schaltdomgehäuse, welches in der Endlage in dem Fahrzeug geneigt eingesetzt wird, die Ausgangsöffnung der Entlüftungseinrichtung am höchsten Punkt angeordnet ist.

Als weiteren möglichen Funktionsabschnitt weist das Schaltdomgehäuse einen oder mehrere Endanschläge auf, welche den Verfahrweg von Schaltschienen begrenzen. Die Endanschläge sind vorzugsweise als Anformungen ausgebildet und ragen über die durch die Kopplungsöffnung definierte Ebene hinaus. Durch die Integration der Endanschläge in das Schaltdomgehäuse können die Toleranzen bzw. Toleranzketten gegenüber einer Lösung, bei der die Endanschläge im Getriebegehäuse angeordnet sind, deutlich verringert werden.

Ein weiterer, optionaler Funktionsabschnitt betrifft einen eingeformten Führungskanal, welcher zur Aufnahme eines Verriegelungsblechs ausgebildet ist. Das Verriegelungsblech dient zur Verriegelung beziehungsweise Freigabe der Schaltschienen, wobei je nach Position des Verriegelungsblechs die Schaltschienen selektiv betätigbar sind. Der Führungskanal ist parallel zu der Schaltwelle und/oder senkrecht zu der Erstreckungsebene der Kopplungsöffnung angeordnet. Durch den eingeformten Führungskanal wird ohne weitere Fertigungskosten eine hochpräzise Aufnahme für das Verriegelungsblech zur Verfügung gestellt. Bevorzugt weist das Schaltdomgehäuse weitere Bohrungen für Befestigungselemente für das Verriegelungsblech auf.

Ein weiterer Gegenstand der Erfindung betrifft einen Schaltdom, insbesondere eine Schaltvorrichtung, zur Übertragung einer Schalt- und/oder Wählbewegung, wobei der Schaltdom ein Schaltdomgehäuse und eine Schaltwelle umfasst, die in dem Schaltdomgehäuse gelagert ist, wobei das Schaltdomgehäuse nach einem der vorhergehenden Ansprüche beziehungsweise wie es zuvor beschrieben wurde, ausgebildet ist.

Bei einer besonders bevorzugten Ausführungsform der Erfindung ist die Schaltwelle fliegend und/oder mit einem frei abstehenden Ende gelagert. Diese Lageranordnung korrespondiert zu der Idee der Erfindung, eine Lagereinrichtung als Teil der Lageranordnung zwischen dem ersten und dem zweiten Kammerbereich zu positionieren. Obwohl eine fliegende Lagerung der Schaltwelle hinsichtlich einer belastungsgerechten Auslegung eher kritisch einzustufen ist, überwiegen jedoch die Vorteile, die sich bei der Fertigung beziehungsweise Montage dieser Anordnung ergeben.

Bei einer bevorzugten Weiterbildung der Erfindung umfasst der Schaltdom eine Rastanordnung zur Verrastung der Schaltwelle, welche in einem der Kammerbereiche angeordnet ist, und eine Kulissenanordnung zur Zwangsführung der Schaltwelle, welche bevorzugt in dem anderen Kammerbereich angeordnet ist. Korrespondierend zu der Rastanordnung beziehungsweise Zwangsführung zeigt die Schaltwelle ein Funktionsteil, welches auf der Schaltwelle drehstarr befestigt ist und welches mit einem schaltdomgehäusefesten Abschnitt zusammenwirkt.

Bei einer Weiterbildung der Erfindung ist die Rastanordnung und/oder die Kulissenanordnung und/oder ein Schaltfingerabschnitt zur Betätigung der Schaltschienen an dem frei abstehenden Ende der Schaltwelle angeordnet, insbesondere ist das korrespondierende Funktionselement an dem frei abstehenden Ende der Schaltwelle befestigt.

Weitere Merkmale, Vorteile und Wirkungen der Erfindung ergeben sich aus der nachfolgenden Beschreibung eines bevorzugten Ausführungsbeispiels der Erfindung sowie den beigefügten Figuren. Dabei zeigen:
- Fig. 1: eine schematische, dreidimensionale Draufsicht von unten auf eine Schaltvorrichtung bzw. Schaltdom mit einem Schaltdomgehäuse als ein erstes Ausführungsbeispiel der Erfindung;
- Fig. 2: eine schematische, dreidimensionale Draufsicht von unten auf das Schaltdomgehäuse der Schaltvorrichtung in Figur 1;
- Fig. 3: eine schematische, dreidimensionale Draufsicht von unten das Schaltdomgehäuse in Figur 2 in leicht gedrehter Darstellung;
- Fig. 4: eine schematische, dreidimensionale Draufsicht von schräg oben auf das Schaltdomgehäuse der Figuren 2 und 3, bzw. die Auβenseite des Schaltdomgehäuses,
- Fig. 5: eine Seitenansicht mit durchgezogenen, verdeckten Linien der Schaltvorrichtung in der Figur 1;
- Fig. 6: eine schematische, dreidimensionale Seitenansicht auf das Hebelwerk der Schaltvorrichtung in der Figur 1 in Detaildarstellung;
- Fig. 7: eine schematische, dreidimensionale Seitenansicht auf das Hebelwerk der Schaltvorrichtung in der Figur 1 in Detaildarstellung aus einer anderen Perspektive;
- Fig. 8: eine schematische, dreidimensionale Ansicht der Verriegelungsmechanik der Schaltvorrichtung in der Figur 1;
- Fig. 9, 10: schematische, dreidimensionale Darstellungen des Fingerabschnittsträgers der Schaltvorrichtung in der Figur 1;
- Fig. 11, 12: den Fingerabschnittsträger in den Figuren 9 und 10 in Draufsicht auf die Prägseite bzw. in Seitenansicht;
- Fig. 13: eine schematische, dreidimensionale Darstellung des Fingerabschnittsträgers der Figuren 9 bis 12 mit aufgesetztem Rastierblech;
- Fig. 14, 15: schematische dreidimensionale Darstellungen des anderen Fingerabschnittsträgers der Schaltvorrichtung in der Figur 1,

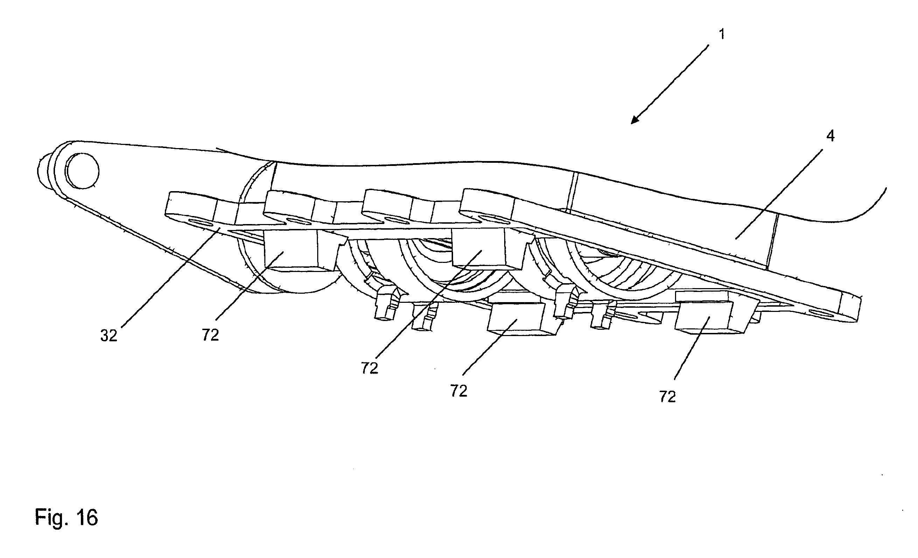

- Figur 16: eine weitere Ausführungsform eines Schaltdomgehäuses.

Die nachfolgenden Figuren zeigen Übersichtsdarstellungen und Detaildarstellungen eines einzigen Ausführungsbeispiels. Gleiche oder einander entsprechende Teile sind jeweils mit gleichen beziehungsweise einander entsprechenden Bezugszeichen versehen. Es ist jedoch darauf hinzuweisen, dass die Einzelbaugruppen oder Einzelkomponenten auch in anderen funktionsähnlichen Vorrichtungen einsetzbar sind.

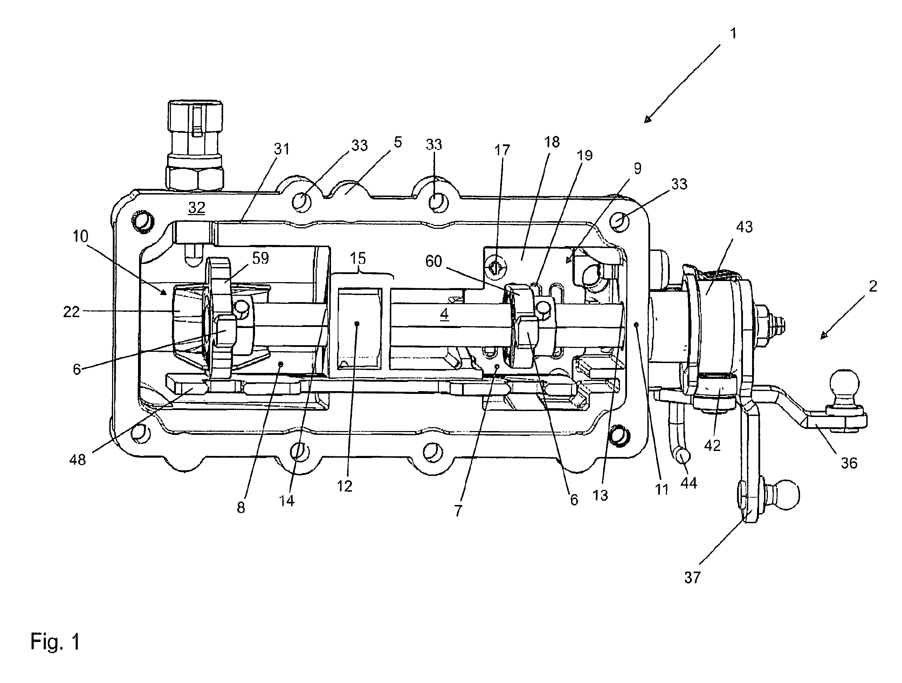

Die Figur 1 zeigt in einer schematischen dreidimensionalen Darstellung eine Schaltvorrichtung 1 bzw. einem Schaltdom mit einem Schaltdomgehäuse 5 als ein Ausführungsbeispiel der Erfindung. Die Schaltvorrichtung 1 ist ausgebildet, um eine Wähl- und/oder Schaltbewegung, welche von einem Benutzer oder einem Aktor eingeleitet wird, umzusetzen und an ein nachgeschaltetes Getriebe, insbesondere ein Zahnräderwechselgetriebe, weiterzugeben.

Zum Einleiten der Schalt- und/oder Wählbewegungen zeigt die Schaltvorrichtung 1 ein Hebelwerk 2, welches mechanische Schnittstellen, zum Beispiel in Form von Kugelköpfen 3, zur mechanischen Kopplung zum Beispiel mit Bowdenzügen oder Schaltstangen aufweist.

Die Wähl- und/oder Schaltbewegungen werden auf eine Schaltwelle 4 übertragen, die in einem Schaltdomgehäuse 5 in ihrer axialen Erstreckung verschiebbar und schwenkbar gelagert ist. An der Schaltwelle 4 sind Schaltfingerabschnitte 6 befestigt, welche die mittlerweile umgesetzte Schalt- und/oder Wählbewegung auf nicht dargestellte Schaltschienen überträgt. Die Schaltschienen erstrecken sich senkrecht zu der Schaltwelle 4, so dass diese bei einer Schwenkbewegung der Schaltfingerabschnitte 6 in Längsrichtung verschoben werden. Die Schaltfingerabschnitte 6 können wahlweise unmittelbar in die Schaltschienen oder über Mitnehmerelemente an den Schaltschienen angreifen. Üblicherweise sind jedem Schaltfingerabschnitt 6 mehrere Schaltschienen, zum Beispiel drei Schaltschienen, zugeordnet, welche in Abhängigkeit der axialen Lage der Schaltwelle 4 von den Schaltfingerabschnitten 6 selektiv betätigt werden und denen - insbesondere bis auf den Rückwärtsgang - jeweils zwei wählbare Gänge, zum Beispiel erster-zweiter Gang oder dritter-vierter Gang, zugeordnet sind.

Das Schaltdomgehäuse 5 weist zwei voneinander räumlich getrennte Kammerbereiche 7, 8 auf, durch beziehungsweise in die sich die Schaltwelle 4 erstreckt. In dem ersten Kammerbereich , durch den sich die Schaltwelle 4 vollständig oder durchgehend erstreckt, ist eine Kulissenanordnung 9 realisiert, die eine Zwangsführung der Schaltwelle 4 hinsichtlich der Verschiebe - und/oder Schwenkbewegungen definiert. In dem zweiten Kammerbereich ist eine Rastanordnung 10 positioniert, welche ein Einrasten der Schaltwelle 4 bei bestimmten Positionen, insbesondere bei zu einem gewählten und/oder eingelegten Gang korrespondierenden Positionen, umsetzt. Zudem wird durch die Rastanordnung 10 die aufzuwendende Schalt- bzw. Wählkraft gesteuert. In dem zweiten Kammerbereich 8 endet die Schaltwelle 4 mit einem freien, ungelagerten Ende.

Die Schaltwelle 4 ist über zwei Lagerbereiche 11, 12 gelagert, wobei der erste Lagerbereich 11 über eine Durchgangsöffnung 13 in dem Schaltdomgehäuse 5 realisiert ist. Der zweite Lagerbereich 12 wird durch eine zweite Durchgangsöffnung 14 gebildet, welche in einem Zwischensteg 15 zwischen dem ersten Kammerbereich 7 und dem zweiten Kammerbereich 8 eingebracht ist. Durch diese Lageranordnung ist die Schaltwelle 4, insbesondere im Hinblick auf das freie Ende im Bereich der Rastanordnung 10, fliegend gelagert. Die erste und die zweite Durchgangsöffnung 13, 14 weisen unterschiedliche Durchmesser auf, wobei die erste Durchgangsöffnung 13 einen größeren Durchmesser aufweist als die zweite Durchgangsöffnung 14, so dass beide Durchgangsöffnungen 13, 14 optional in einem gemeinsamen Arbeitsgang mit einem Stufenbohrer oder dergleichen hochpräzise zueinander eingebracht werden können.

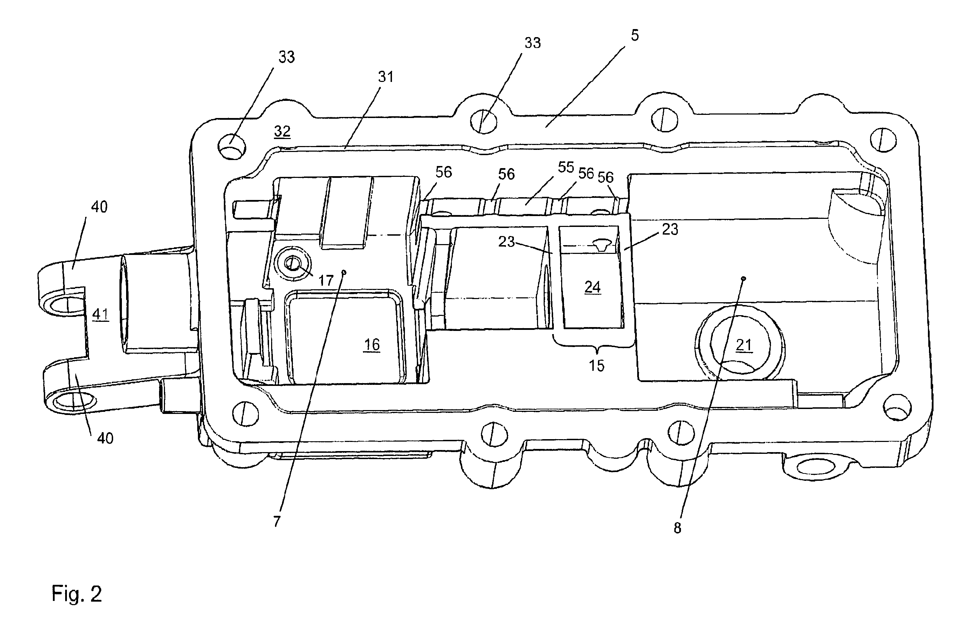

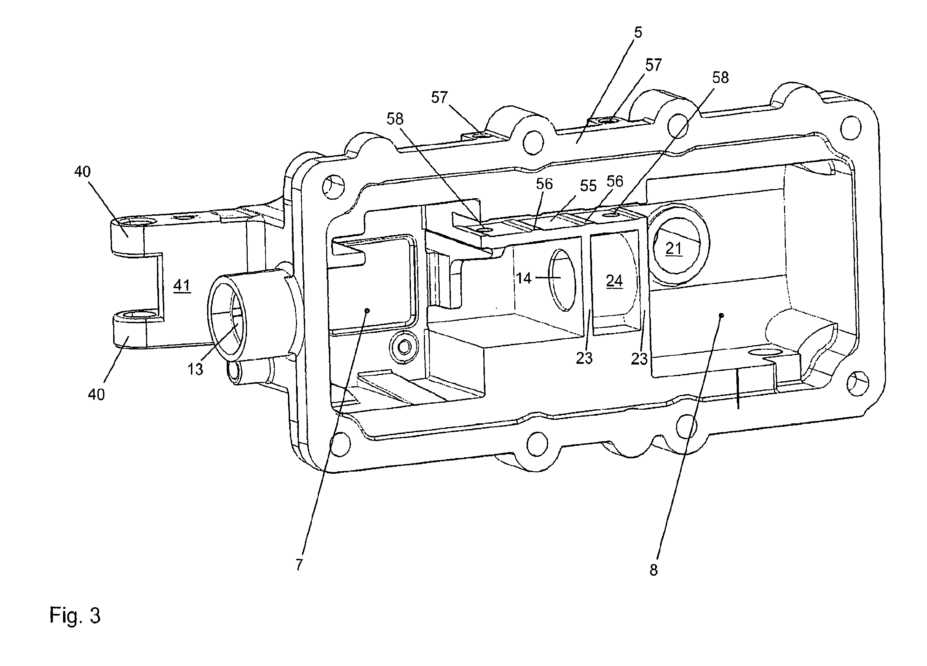

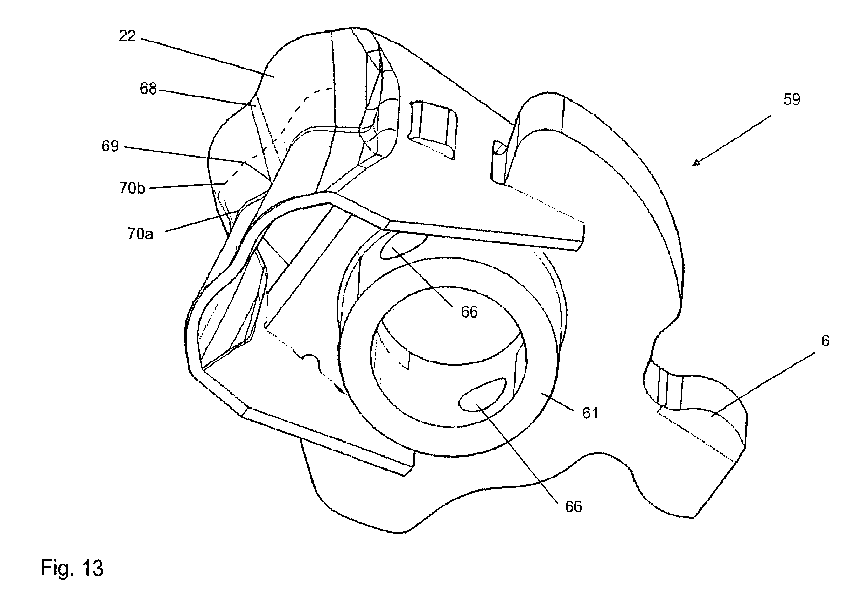

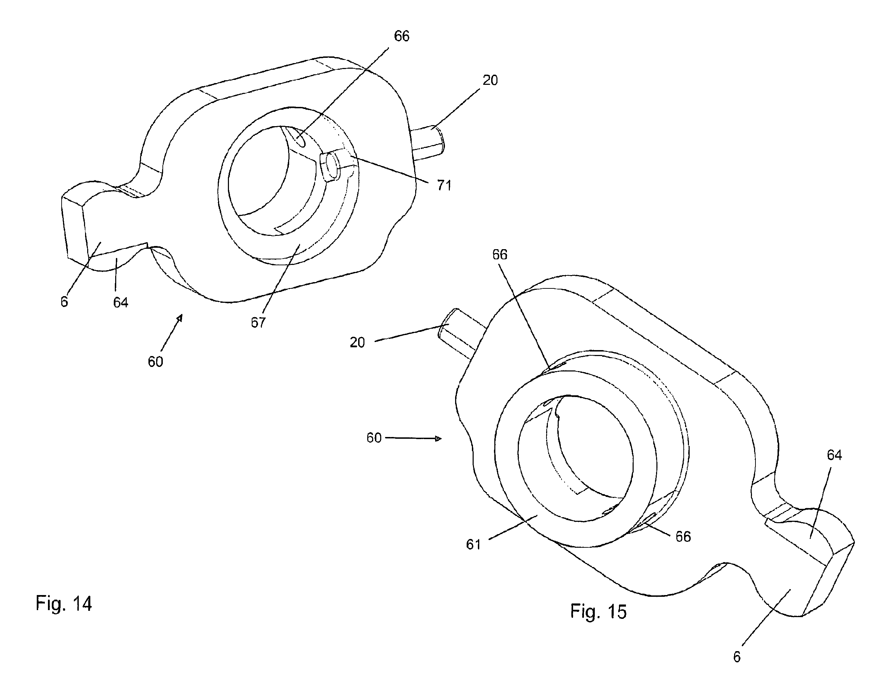

Die Figuren 2 und 3 zeigen zwei unterschiedliche, dreidimensionale Ansichten des Schaltdomgehäuses 5, welches in diesem Beispiel als ein einstückiges Aluminiumdruckgussgehäuse ausgebildet ist und wobei alle anderen Komponenten der Schaltvorrichtung 1 zeichnerisch unterdrückt sind. In dem ersten Kammerbereich 7 ist eine Aufnahme 16 sowie Befestigungsmittel 17 zur Aufnahme einer Kulissenplatte 18 (Figur 1) angeordnet. Die Kulissenplatte 18 kann beispielsweise in das Schaltdomgehäuse 5 eingeschraubt, eingepresst, eingeklebt oder verstemmt werden und zeigt - wie es sich andeutungsweise aus der Figur 1 ergibt - einen freien Bereich 19, in die ein Führungsstift 20 (Figuren 14 und 15) eingreifen kann und die eine Schaltkulisse für die Schaltwelle 4 bildet. In dem zweiten Kammerbereich 8 ist eine Aussparung 21 zur Aufnahme einer Raste, insbesondere einer Kugelraste vorgesehen, welche ein Rastblech 22 (Figur 13) bei den Schalt- bzw. Wählbewegungen der Schaltwelle 4 abfährt.

Die erste Durchgangsöffnung 13 beziehungsweise die zweite Durchgangsöffnung 14 sind jeweils zur Aufnahme eines Lagers, insbesondere eines Gleitlagers, zur Lagerung der Schaltwelle 4 ausgebildet.

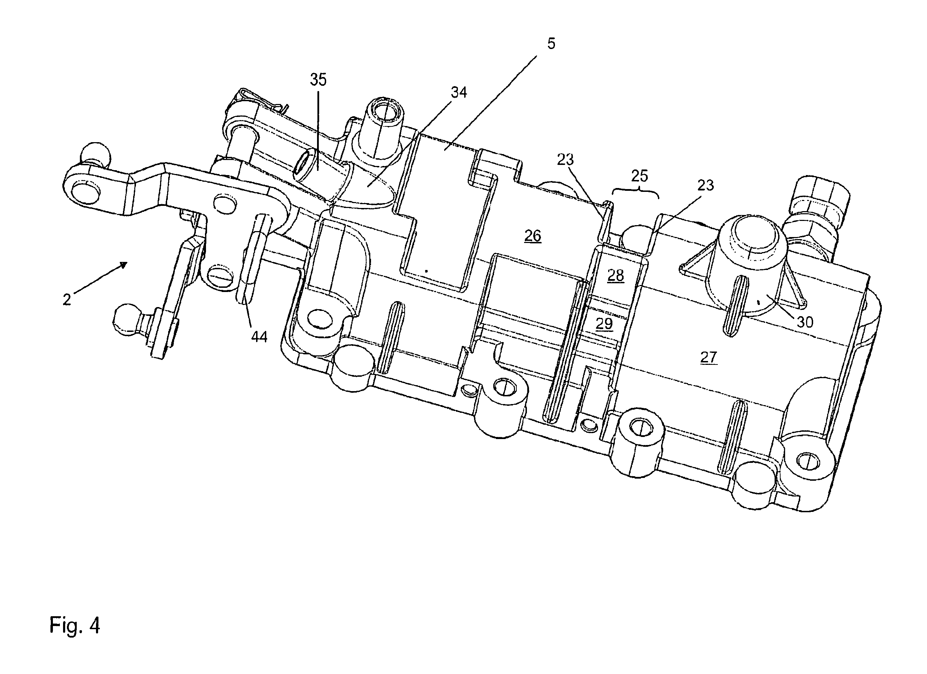

Der Zwischensteg 15 weist von der Innenseite des Schaltdomgehäuses 5 betrachtet zwei Seitenplatten 23 auf, die den ersten Kammerbereich 7 beziehungsweise den zweiten Kammerbereich 8 begrenzen und senkrecht zu der Schaltwelle 4 ausgerichtet sind. Zudem umfasst der Zwischensteg 15 eine im Querschnitt halbkreisförmig ausgebildete Lagerabdeckung 24, welche im Durchmesser an den Außendurchmesser des die Schaltwelle 4 aufnehmenden Lagers angepasst ist. Betrachtet man das Schaltdomgehäuse 5 von der Außenseite, wie es beispielsweise in der Figur 4 dargestellt ist, so ist korrespondierend zu dem Zwischensteg 15 ein Einschnürungsbereich 25 vorgesehen, welcher zwischen einer ersten Kuppel 26 und einer zweiten Kuppel 27 angeordnet ist. Die erste Kuppel 26, korrespondiert zu dem ersten Kammerbereich 7, die zweite Kuppel 27 korrespondiert zu dem zweiten Kammerbereich 8. Seitlich sind erste beziehungsweise zweite Kuppel 26, 27 durch die Seitenplatten 23 begrenzt. Zur gegenseitigen Abstützung der Seitenplatten 26, 27 ist ein Axialsteg 28 vorgesehen. Die außenseitige Abstützung des Lagers für die Schaltwelle 4 erfolgt durch einer ebenfalls im Querschnitt halbkreisförmig ausgebildeten Lagerabdeckung 29, welche sich zusammen mit der inneren Lagerabdeckung 24 zu einem Hülsenkörper ergänzt. Dieser komplexe Aufbau des Zwischenstegs 15 ist eine fertigungsgerechte Realisierung des Schaltdomgehäuses 5, da sämtliche Wandungen in diesem Bereich, also insbesondere die Lagerabdeckungen 24, 29 und die Seitenplatten 23 eine einheitliche Dicke aufweisen, so dass bei dem Druckgussverfahren Lunkerbildung oder Verzug des Bauteils etc. vermieden oder zumindest minimiert werden kann. Dies wird vorteilhafterweise auch dadurch erreicht, dass korrespondierend zu dem Zwischensteg 15 außenseitig der Einschnürungsbereich 25 vorgesehen ist. Aus der Figur 4 ergibt sich auch, dass die Aussparung 21 (Figur 2, 3) in eine Aufnahme 30 für einer Raste weitergeführt wird.

Wie sich aus den Figuren 1 bis 3 ergibt, zeigt das Schaltdomgehäuse 5 eine rechteckige Kopplungsöffnung 31 über die das Schaltdomgehäuse 5 mit einem weiteren Gehäuse, in dem die Schaltschienen, etc. angeordnet sind, kommunizierend verbindbar ist. Die Kopplungsöffnung 31 wird durch einen umlaufenden Dichtbereich 32 umschlossen, welcher eine Dichtebene zu dem nachfolgenden Gehäuse bildet. Zur Befestigung des Schaltdomgehäuses 5 an dem anderen Gehäuse sind Durchgangslöcher 33 im Dichtbereich 32 vorgesehen. Zu unterstreichen ist, dass die Kopplungsöffnung 31 und die Schaltwelle 4 gleichgerichtet angeordnet sind, und dass die Schaltwelle 4 in dem Schaltdomgehäuse 5 derart angeordnet ist, dass diese nicht über die Dichtungsebene des Dichtungsbereichs 32 herausragt.

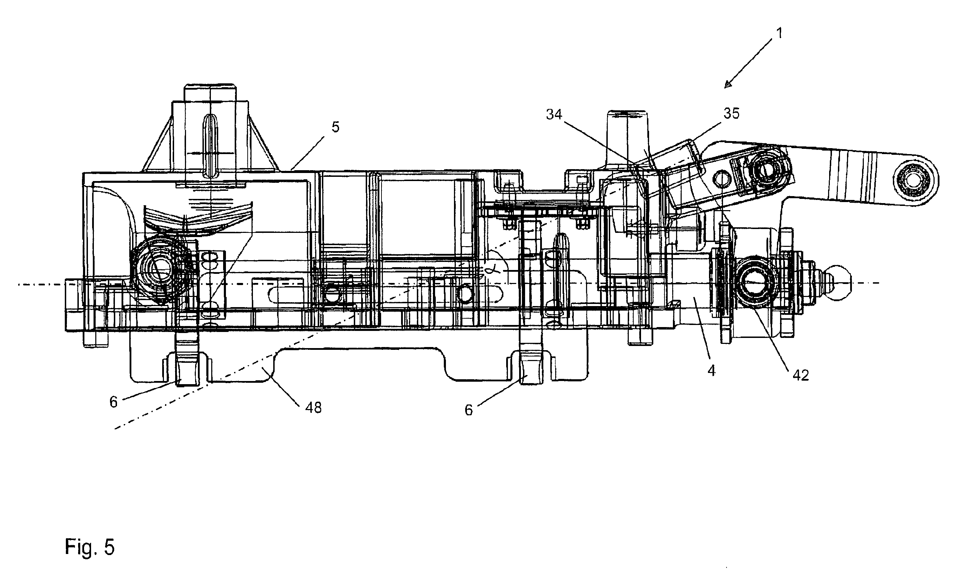

Eine weitere Besonderheit des einstückigen Schaltdomgehäuses 5 stellt die Entlüftungsaufnahme 34 dar, welche zur Aufnahme eines Entlüftungsrohres oder Stopfens 35 ausgebildet ist. Um im eingebauten Zustand ein Auslaufen oder Ausspritzen von Getriebeöl zu verhindern, ist die Erstreckung der Entlüftungsaufnahme 34 zu der Erstreckung der Schaltwelle 4 um einen Winkel α (Figur 5) zwischen 20° und 30° geneigt. Die Berücksichtigung der Einbaulage des Schaltdomgehäuses 5 bei dem Entwurf erlaubt es, die Entlüftungsaufnahme 34 auch bei einem schräg aufgesetzten Schaltdomgehäuse 5 so zu positionieren, dass ein Rückhalt von Getriebeöl optimal verwirklicht ist.

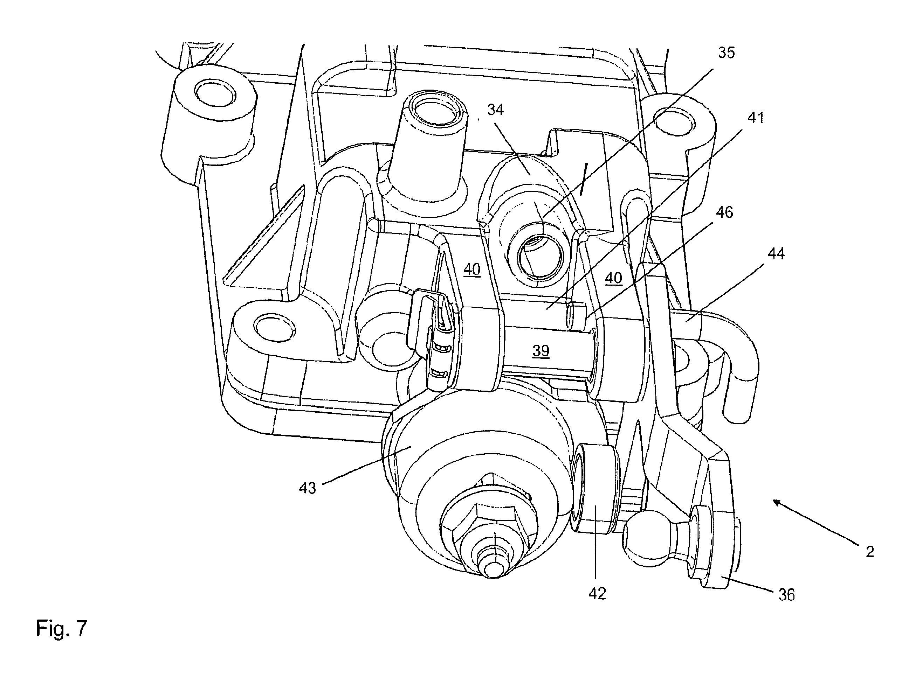

Das Hebelwerk 2, welches in den Figuren 1, 4, 5 und zudem in den schematischen dreidimensionalen Darstellungen der Figuren 6 und 7 dargestellt ist, erlaubt die Betätigung der Schaltwelle 4, so dass die in axialer Richtung verschoben und um ihre Längserstreckung geschwenkt werden kann. Hierzu weist das Hebewerk 2 - wie es am besten aus der Figur 1 zu ersehen ist - einen Übertragungswählhebel 36, welcher zur Übertragung einer Bewegung von einem der Kugelköpfe 3 in einen axialen Versatz der Schaltwelle 4 ausgebildet und/oder angeordnet ist und ein Übertragungsschalthebel 37, welcher zur Übertragung einer Schaltbewegung von dem anderen Kugelkopf 3 in eine Verschwenkung der Schaltwelle 4 ausgebildet und/oder angeordnet ist. Der Übertragungsschalthebel 37 ist mit der Schaltwelle 4 drehfest verbunden und überträgt die Schaltbewegung unmittelbar ohne ein zwischengeschaltetes Schwenklager. Der Übertragungswählhebel 36 ist dagegen über ein Schwenklager 38 auf dem Schaltdomgehäuse 5 schwenkbar gelagert. Das Schwenklager 38 weist einen Schwenkzapfen 39 auf, welcher in zwei einstückig an das Schaltdomgehäuse 5 angeformte Seitenstege 40 aufgenommen ist. Die Seitenstege 40 sind zur Erhöhung der mechanischen Stabilisierung über einen Verbindungsabschnitt 41 miteinander verbunden, wobei das Verhältnis der Längserstreckung der Seitenstege 40 und dem Verbindungsabschnitt 41 bei diesem Ausführungsbeispiel in etwa 3 : 2 entspricht. Auch der Verbindungsabschnitt 41 ist einstückig mit dem Schaltdomgehäuse 5 verbunden.

Der Übertragungswählhebel 36 weist an seinem ersten freien Ende den Kugelkopf 3 und an seinem zweiten freien Ende eine Rolle 42 auf, welche zur Betätigung der Schaltwelle 4 ausgebildet und/oder angeordnet ist. Die freien Enden beziehungsweise die Aufnahmen der Betätigungselemente Kugelkopf 3 beziehungsweise Rolle 42 sind bezüglich der Lage des Schwenklagers 38 in etwa rechtwinklig und/oder dreiecksförmig zueinander angeordnet. Zur Erhöhung der Stabilität des Übertragungswählhebels 36 ist der Hebelarm mit dem Kugelkopf 3 ein- oder mehrfach hier beispielsweise zweifach abgewinkelt ausgebildet. Die Rolle 42 ist in Richtung der Schaltwelle 4 auf einem radial abstehenden Rand einer Kappe 43 und in axialer Gegenrichtung - wie sich insbesondere aus der Figur 1 ergibt - auf dem Übertragungsschalthebel 37 gelagert. Durch eine Betätigung des Übertragungswählhebels 36 wird dieser um sein Schwenklager 38 geschwenkt und - je nach Betätigungsrichtung - wird die Rolle 42 in axialer Richtung auf das Schaltdomgehäuse 5 oder in Gegenrichtung bewegt, wobei die Rolle 42 über die Kappe 43 beziehungsweise den Übertragungsschalthebel 37 die Schaltwelle 4 in axialer Richtung verschiebt.

Als Transport- und/oder Montagesicherung weist die Schaltvorrichtung 1 ein Sperrelement in Form eines Sperrstiftes 44 auf, welcher im gesperrten Zustand des Schaltvorrichtung 1 eingesetzt und im entsperrten Zustand vollständig entnommen ist. Der Sperrstift 44 ist bei dieser Ausführungsform als ein gebogenes Rundmaterial mit einem kreisrunden Querschnitt ausgebildet, welcher durch ein erstes Sperrloch 45 in dem Übertragungswählhebel 36 und ein zweites Sperrloch 46 in einem der Seitenstege 40 geführt ist, die in der gesperrten Stellung fluchtend zueinander angeordnet sind. Der Sperrstift 44 - oder für andere Ausführungsbeispiele allgemeiner formuliert - das Sperrelement setzt die Funktion um, den Übertragungswählhebel 36 gegen das Schaltdomgehäuse 5 zu arretieren. Diese Art der Transport- und Montagesicherung weist zwei Besonderheiten auf: Zum einen ist die Schaltwelle 4 über das Sperrelement direkt an dem Schaltdomgehäuse 5 gesperrt, so dass die Schaltvorrichtung 1 als eine komplette, gesperrte Baueinheit an ein Getriebe montiert werden kann. Zum zweiten ist über das Sperrelement nur und ausschließlich einer der Übertragungshebel, bei diesem Ausführungsbeispiel der Übertragungswählhebel 36, gesperrt, wohingegen der andere Übertragungshebel, bei diesem Ausführungsbeispiel der Übertragungsschalthebel 37, frei läuft und z.B. eine Schaltbewegung der Schaltwelle 4 auch im gesperrten Zustand ermöglicht ist. Bei der Montage ist es demzufolge möglich, die Schaltwelle 4 in axialer Richtung zu arretieren, in Umlaufrichtung jedoch freilaufend zu lassen, und so die die Montagearbeit zu erleichtern.

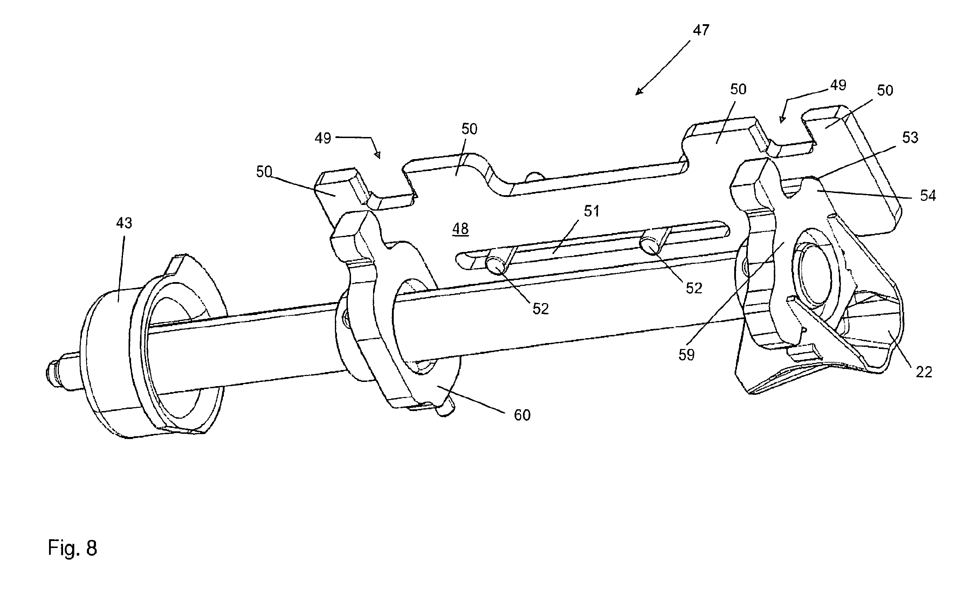

Die Figur 8 zeigt eine schematische dreidimensionale Darstellung der Schaltvorrichtung 1, wobei eine Mehrzahl der Bestandteile, insbesondere das Schaltdomgehäuse 5 in der Darstellung grafisch unterdrückt ist. In der Figur 8 sind die Funktionselemente eines Verriegelungsmechanismus 47 gezeigt, welche in Zusammenwirkung mit dem Schaltdomgehäuse 5 eine Verriegelung der Schaltschienen beziehungsweise der Mitnehmerelemente erlaubt. Aufgabe des Verriegelungsmechanismus 47 ist es, ein Verschalten, also ein Diagonalschalten bei der Betätigung der Schaltvorrichtung 1 zu verhindern. Wie bereits erläutert, sind jedem Schaltfingerabschnitt 6 eine Mehrzahl von senkrecht zu der Schaltwelle 4 angeordnete Schaltschienen zugeordnet, welche parallel zueinander positioniert sind und jeweils ein Schaltmaul zur Aufnahme des Schaltfingerabschnitts 6 aufweisen. Durch die axiale Verschiebung der Schaltwelle 4 wird die zu betätigende Schaltschiene ausgewählt, durch Verschwenken der Schaltwelle 4 wird in dem nachgeschalteten Getriebe über eine Längsverschiebung der schaltschiene der zu der Schaltschiene und Schieberichtung korrespondierende Gang eingelegt. Aufgabe des Verriegelungsmechanismus 47 ist nun, ausschließlich die zu betätigende Schaltschiene freizugeben und die jeweils dazu benachbarten Schaltschienen gegenüber einer Bewegung in Längsrichtung der Schaltschienen zu sperren. Hierzu weist der Verriegelungsmechanismus 47 ein Verriegelungsblech 48 auf, welches im Wesentlichen aus einem ebenen Blech gefertigt ist. Das Verriegelungsblech 48 zeigt zwei randseitig geöffnete und im Querschnitt rechteckige Schaltschienenmäuler 49, die von benachbarten Sperrbereichen 50 umgeben sind. Die in axialer Richtung der Schaltwelle 4 freie Breite der Schaltschienenmäuler 49 ist auf die Breite der Schaltschiene so abgestimmt, dass sich jeweils genau eine Schaltschiene frei in den Schaltschienenmäulern 49 bewegen kann. Die jeweils dazu benachbarten Schaltschienen sind jedoch durch die Sperrbereiche 50 gegenüber einer Betätigung durch den Schaltfingerabschnitt 6 gesperrt. Das Verriegelungsblech 48 weist im Mittelbereich ein Langloch 51 auf durch das zwei Fixierstifte 52 geführt sind, welche in dem Schaltdomgehäuse 5 ortsfest befestigt sind. Ferner weist das Verriegelungsblech 48 eine Mitnahmeöffnung 53 auf, in die ein Mitnahmeflügel 54, welcher fest mit der Schaltwelle 4 verbunden ist, eingreift.

Bei einer axialen Verschiebung der Schaltwelle 4 greift der Mitnahmeflügel 54 in die Mitnahmeöffnung 53 ein und verschiebt entlang des Langlochs 51 das Verriegelungsblech 48 parallel und/oder synchron mit der Schaltwelle 4. Durch die Mitnahme des Verriegelungsblechs 48 durch die Schaltwelle 4 in axialer Richtung werden in gleicher Weise die Schaltschienenmäuler 49 verschoben und auf diese Weise die in der neuen Position ausgewählten Schaltschienen durch die Schaltschienenmäuler 49 freigegeben und die jeweils nichtgewählten Schaltschienen durch die Sperrbereiche 50 gesperrt. Der Mitnahmeflügel 54 ist dabei so ausgebildet, dass in jeder möglichen Stellung in Umfangsrichtung der Mitnahmeflügel 54 im Eingriff mit den Rändern der Mitnahmeöffnung 53 steht. Die Aufnahme des Verriegelungsblechs 48 in dem Schaltdomgehäuse wird nachfolgend anhand der Figuren 2 und 3 erläutert.

Das Schaltdomgehäuse 5 weist zur Führung des Verriegelungsblechs 48 einen eingeformten Führungskanal 55 auf, welcher sich parallel zur Längserstreckung der Schaltwelle 4 erstreckt. Der Führungskanal 55 ist im Querschnitt senkrecht zur Längserstreckung der Schaltwelle 4 U-förmig ausgebildet, so dass das Verriegelungsblech 48 von drei Seiten geführt ist. Der Führungskanal 55 weist an den Seitenflächen Führungsmittel in Form von Stegen 56 auf, welche eine reibungsarme Führung des Verriegelungsblechs 48 erlauben. Der Führungskanal 55 erstreckt sich zwischen dem ersten Kammerbereich 7 und dem zweiten Kammerbereich 8, so dass auch das Verriegelungsblech 48 in beide Kammerbereiche 7, 8 eingreift. Zur Festlegung des Verriegelungsblechs 48 weist das Schaltdomgehäuse 5 Aufnahmeöffnungen, bei diesem Ausführungsbeispiel ausgebildet als Bohrungen 57, auf, so dass die Fixierstifte 52 von außen zunächst durch die Wandung des Schaltdomgehäuses 5, dann durch das Langloch 51 und schließlich in einen Sacklochabschnitt 58 eingetrieben werden können. Das Verriegelungsblech 48 in einem eingebauten Zustand ist beispielsweise in der Figur 1 zu erkennen. Aus der Figur 5 ergibt es sich, dass das Verriegelungsblech 48 über die Dichtungsebene übersteht und in etwa mit den Fingerabschnitten 6 abschließt. Bei der Ausbildung des Verriegelungsblechs 48 beziehungsweise dessen Aufnahme sind selbstverständlich Modifikationen denkbar, so kann statt des einen Langlochs 51 mehrere Langlöcher vorgesehen sein. Hervorzuheben ist jedoch, dass der Führungskanal 55 in das Schaltdomgehäuse 5 eingeformt ist, und dass das Verriegelungsblech 48 als ein verhältnismäßig einfaches Bauteil ausgebildet ist, welches günstig herstellbar ist. Der Verriegelungsmechanismus 47 ist somit insgesamt fertigungstechnisch günstig umsetzbar.

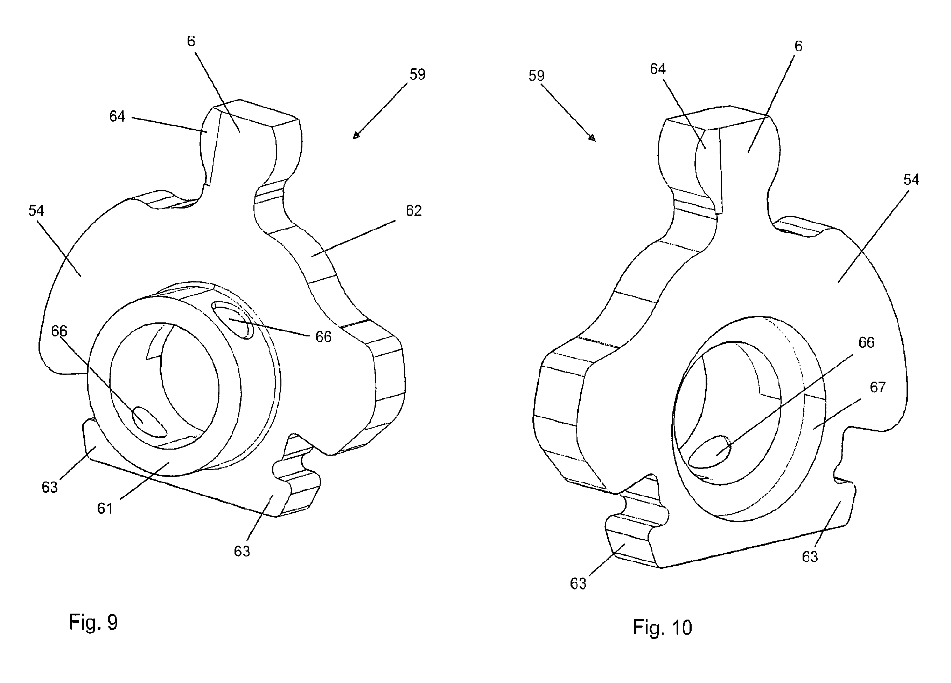

Die Figuren 9 bis 15 zeigen jeweils verschiedene Ansichten der Schaltfingerträger 59 bzw. 60, welche jeweils einen der Schaltfingerabschnitte 6 tragen. Der Schaltfingerträger 59 ist an dem freien Ende der Schaltwelle 4 angeordnet und trägt ergänzend zu dem Schaltfingerabschnitt 6 den Mitnahmeflügel 54. Der Schaltfingerträger 59 ist in den Figuren 9 bis 13 in verschiedenen Darstellungen gezeigt.

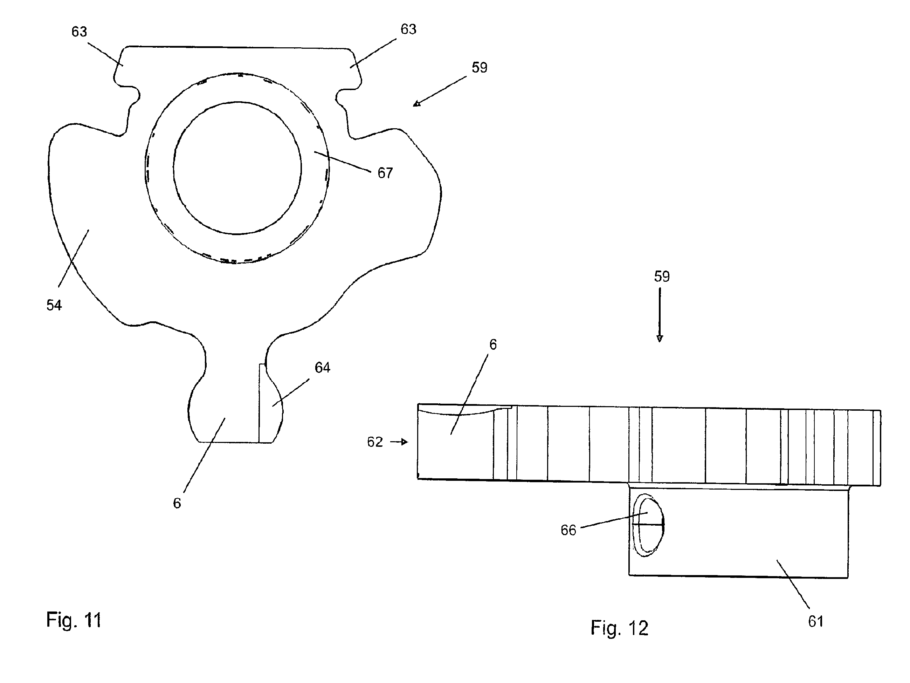

Der Schaltfingerträger 59 ist als ein einstückiges Umformteil ausgebildet, welches über eine Verfahrensfolge von Stanzen und ein- oder mehrfaches Umformen gebildet ist. Bei der Fertigung wird zunächst in einem ersten Fertigungsschritt aus einem ebenen Blechhalbzeug mit einer Dicke von zum Beispiel 7 mm ein Zwischenprodukt ausgetrennt, insbesondere ausgestanzt. Das Zwischenprodukt weist eine wie in der Figur 9 gezeigte Außenkontur und zudem ein Vorloch auf, welches zentral zu einem Hülsenabschnitt 61 angeordnet ist. In den nachfolgenden Umformschritten wird der Hülsenabschnitt 61 über ein ein- oder mehrstufiges Kragenziehen gebildet. Im Ergebnis weist der Schaltfingerträger 59 einen Ebenenabschnitt 62 auf, welcher als Funktionselemente die Mitnahmeflügel 54, den Schaltfingerabschnitt 6 und einen Kopplungsbereich 63 zur Ankopplung des Rastierblechs 22 umfasst. Der Mitnahmeflügel 54 ist in Draufsicht, wie sie beispielsweise in der Figur 11 gezeigt ist, als ein Teilkreisabschnitt ausgebildet, dessen Zentrum in der Schwenkachse des Schaltfingerträgers 59 gelegt ist. Der Schaltfingerabschnitt 6 ist am freien Ende beidseitig mit einer diagonal gegenüberliegenden Anprägung 64 versehen. Der Hülsenabschnitt 60 ist vom freien Innendurchmesser auf dem Außendurchmesser der Schaltwelle 4 angepasst und weist zwei Befestigungslöcher 66 auf, welche zur Aufnahme von Befestigungselementen ausgebildet sind, die eine verdrehfeste Befestigung des Schaltfingerträgers 59 auf der Schaltwelle 4 erlauben. Der Hülsenabschnitt 61 ist als ein abgestreckter Kragen ausgebildet, welcher innenseitig und außenseitig jeweils eine Zylindermantelfläche darstellt, die koaxial und konzentrisch zueinander verlaufen.

Die Figur 10 zeigt eine dreidimensionale Draufsicht auf die dem Hülsenabschnitt 61 abgewandte Seite des Schaltfingerträgers 59, wobei im Bereich des Hülsenabschnitts 61 eine umlaufende Abstufung 67 zu erkennen ist. Diese Abstufung ist Kennzeichen eines mehrstufigen Umformvorgangs, wobei in einem ersten Umformschritt die Abstufung 67 erzeugt und Material in Umformrichtung verschoben wird und in einem zweiten Umformschritt das bereits durchgezogene Material mittels Kragenziehen in den Hülsenabschnitt 61 umgeformt wird.

Wie sich insbesondere aus der Figur 12, welche eine seitliche Draufsicht auf den Schaltfingerträger 59 zeigt, ist die freie Länge des Hülsenabschnitts 60 in Längserstreckung der Schaltwelle 4 größer als die Dicke des Ebenenabschnitts 62. Durch das mindestens zweistufige Umformverfahren wird es ermöglicht, den Hülsenabschnitt 61 der dargestellten Länge zu realisieren, so dass eine ausreichende Sicherung des Schaltfingerträgers 59 gegen Verkippung erreichbar ist.

Die Figur 13 zeigt in einer ebenfalls schematischen dreidimensionalen Darstellung den Schaltfingerträger 59 mit aufgesetztem Rastierblech 22, wobei das Rastierblech 22 als ein im Querschnitt senkrecht zur Längserstreckung der Schaltwelle 4 umgedreht u-förmiges Blechformteil ausgebildet ist, welches mittels einer stoffschlüssigen Verbindung, insbesondere Schweißen an den Schaltfingerträger 59 befestigt ist. An der dem Schaltfingerträger 59 abgewandten Oberseite des Rastierblechs 22 weist dieses eine topologische Schaltkontur auf, über die eine Raste, welche in der Aussparung 21 angeordnet ist, bei Schalt- oder Wählbewegungen abrollt und Schalt- bzw. Rückstellkräfte erzeugt. In einer Mittelstellung rollt die Raste dabei über einen Wählkanal 68 ab, welcher ein absolutes Minimum 69 aufweist, so dass die Schaltwelle 4 sich automatisch auf diese Position zurückstellt. Senkrecht zu dem Wählkanal 68 sind Schaltkanäle 70 a, 70 b, etc. konturiert, über die die jeweiligen Schalt- bzw. Wählkräfte gesteuert werden.

Die Figuren 14 und 15 zeigen in ähnlicher Darstellung den Schaltfingerträger 60, welcher in der Figur 8 als mittiger Schaltfingerträger 60 angeordnet ist. Die Herstellung des Schaltfingerträgers 60 erfolgt analog zu der Herstellung des Schaltfingerträgers 59, so dass auf die obige Beschreibung verwiesen wird. In Abgrenzung zu dem Schaltfingerträger 59 weist der Schaltfingerträger 60 neben dem Schaltfingerabschnitt 6 einen Führungsstift 20 auf, welcher in Bezug auf den Hülsenabschnitt 60 gegenüberliegend zu dem Schaltfingerabschnitt 6 angeordnet ist. Der Führungsstift 20 wird von eine Durchgangsbohrung 71 aufgenommen, welche von der Außenseite bis in die Abstufung 67 verläuft, so dass der Bereich der Abstufung 67 vorteilhaft ausgenutzt werden kann, ohne die Befestigung des Schaltfingerträgers 60 auf der Schaltwelle 4 zu stören. Mit seinem freien Ende ragt der Kulissenstift 20 in die Kulissenplatte 18 und wird dort über die eingebrachte Kulisse zwangsgeführt, so dass nur der Wählkanal 68 beziehungsweise die Schaltkanäle 70 a und folgende abgefahren werden können.

Die Figur 15 zeigt ein abgewandeltes Ausführungsbeispiel der Erfindung in einer schematischen dreidimensionalen Darstellung von der Seite, wobei ein Teil des Schaltdomgehäuses 4 zeichnerisch unterdrückt ist. Als Hauptunterschied zu dem Schaltdomgehäuse 4 in den vorhergehenden Figuren weist das Schaltdomgehäuse 4 in der Figur 15 Endanschläge 72 auf, welche so ausgebildet sind, dass diese den Verfahrweg von nicht-dargestellten Schaltschienen begrenzen. Die Endanschläge 72 kragen senkrecht zu der durch den Dichtbereich 32 gebildeten Dichtungsebene aus, sind im Querschnitt parallel zu der Dichtungsebene rechteckig ausgebildet und laufen verjüngend auf das eigene freie Ende zu. Die Breite in Längsrichtung des Schaltdomgehäuses 4 ist so angepasst, dass die Endanschläge 72 von mehreren Schaltschienen genutzt werden können. Jeweils zwei der Endanschläge 72 stehen sich in Querrichtung des Schaltdomgehäuses 4 gegenüber, so dass das jeweilige Paar der Endanschläge 72 einen beidseitigen Anschlag für die Schaltschienen bereitstellt. In der gezeigten Ausführungsform sind die Endanschläge 72 einstückig an das Schaltdomgehäuse angeformt, bei abgewandelten Ausführungsformen können die Endanschläge auch als separate Bauteile auf- bzw. eingesetzt sein. Der Vorteil der Integration der Endanschläge 72 in das Schaltdomgehäuse 4 liegt bei einer Verkleinerung der auftretenden Toleranzen hinsichtlich der Relativlage von Schaltschienen und Endanschlägen in Vergleich zu konventionellen Bauformen.

### Bezugszeichenliste

- 1: Schaltvorrichtung
- 2: Hebelwerk
- 3: Kugelköpfe
- 4: Schaltwelle
- 5: Schaltdomgehäuse
- 6: Schaltfingerabschnitt
- 7: 1. Kammerbereich
- 8: 2. Kammerbereich
- 9: Kulissenanordnung
- 10: Rastanordnung
- 11: Lagerbereich
- 12: Lagerbereich
- 13: 1. Durchgangsöffnung
- 14: 2. Durchgangsöffnung
- 15: Zwischensteg
- 16: Aufnahme
- 17: Befestigungsmittel
- 18: Kulissenplatte
- 19: freier Bereich
- 20: Führungsstift, Kulissenstift
- 21: Aussparung
- 22: Rastblech, Rastierblech
- 23: Seitenplatte
- 24: innere Lagerabdeckung
- 25: Einschnürungsbereich
- 26: 1. Kuppel
- 27: 2. Kuppel
- 28: Axialsteg
- 29: Lagerabdeckung
- 30: Aufnahme
- 31: Kopplungsöffnung
- 32: Dichtbereich
- 33: Durchgangslöcher
- 34: Entlüftungsaufnahme
- 35: Stopfen
- 36: Übertragungswählhebel
- 37: Übertragungsschalthebel
- 38: Schwenklager
- 39: Schwenkzapfen
- 40: Seitenstege
- 41: Verbindungsabschnitt
- 42: Rolle
- 43: Kappe
- 44: Sperrstift
- 45: 1. Sperrloch
- 46: 2. Sperrloch
- 47: Verriegelungsmechanismus
- 48: Verriegelungsblech
- 49: Schaltschienenmäuler
- 50: Sperrbereich
- 51: Langloch
- 52: Fixierstift
- 53: Mitnahmeöffnung
- 54: Mitnahmeflügel
- 55: Führungskanal
- 56: Steg
- 57: Bohrung
- 58: Sacklochabschnitt
- 59: Schaltfingerträger
- 60: Schaltfingerträger
- 61: Hülsenabschnitt
- 62: Ebenenabschnitt
- 63: Kopplungsbereich
- 64: Ausprägung
- 65: nicht verwendet
- 66: Befestigungslöcher
- 67: Abstufung
- 68: Wählkanal
- 69: Minimum
- 70 a, 70 b: Schaltkanäle
- 71: Durchgangsöffnung
- 72: Endanschläge

## Patentansprüche

1. Schaltdomgehäuse (5) zur Abdeckung und/oder Aufnahme eines Schaltmechanismus für ein Getriebe mit einer Lageranordnung (11,12) zur Lagerung einer Schaltwelle (4), so dass die Schaltwelle (4) in dem Schaltdomgehäuse (5) längsverschiebbar und schwenkbar gelagert ist, mit einer Kopplungsöffnung (31) zur Verbindung mit einem Gehäuse, insbesondere einem Getriebegehäuse, wobei die Längserstreckung der Schaltwelle (4) zur Flächenerstreckung der Kopplungsöffnung (31) gleichgerichtet ist, wobei das Schaltdomgehäuse (4) einen ersten (7) und einen zweiten Kammerbereich (8) aufweist, in die sich die Schaltwelle (4) erstreckt wobei, zwischen dem ersten und dem zweiten Kammerbereich (7,8) eine erste Lagereinrichtung (12) als Teil der Lageranordnung positioniert ist, wobei
- eine innere Lageraufnahme (14) für die erste Lagereinrichtung (12) und/oder die erste Lagereinrichtung einstückig an dem Schaltdomgehäuse (5) angeformt ist, wobei
- die innere Lageraufnahme (14) und/oder oder die erste Lagereinrichtung (12) eine erste Durchgangsöffnung in einem Teilabschnitt des Schaltdomgehäuses (5) umfasst, wobei
- der Teilabschnitt als ein Steg (15) ausgebildet ist, welcher den ersten und den zweiten Kammerbereich (7,8) trennt und welcher an der Innenseite des Schaltdomgehäuses in einem Anformbereich angeformt ist, **dadurch gekennzeichnet, dass**
- die Außenseite des Schaltdom gehäuses zwei Kuppeln (26,27) korrespondierend zu den beiden Kammerbereichen (7,8) aufweist, welche durch einen Einschnürbereich (25) voneinander getrennt sind, wobei der Einschnürbereich (25) gegenüberliegend zu dem Anformbereich des Stegs (15) angeordnet ist und wobei
- die Wandungen ( 28, 29) der Kuppeln (26,27) eine einheitliche Wandstärke aufweisen.

2. Schaltdomgehäuse (5) nach Anspruch 1, **gekennzeichnet durch** eine zweite Lagereinrichtung (11) als Teil der Lageranordnung, wobei die zweite Lageranordnung (11) und/oder eine äußere Lageraufnahme (13) für die zweite Lagereinrichtung (11) eine zweite Durchgangsöffnung umfasst, welche vorzugsweise in einer Außenwandung des Schaltdomgehäuses (5) angeordnet ist.

3. Schaltdomgehäuse (5) nach Anspruch 2, **dadurch gekennzeichnet, dass** die Lageranordnung (11,12) ausschließlich durch die erste und die zweite Lagereinrichtung gebildet ist.

4. Schaltdomgehäuse (5) nach einem der vorhergehenden Ansprüche, **gekennzeichnet durch** eine Entlüftungseinrichtung (34) mit einem Entlüftungskanal, wobei die Entlüftungsrichtung des Entlüftungskanals einen Winkel (alpha) zwischen 10° und 40°, vorzugsweise zwischen 20° und 30° zu der Schaltwelle (4) einnimmt.

5. Schaltdomgehäuse (5) nach einem der vorhergehenden Ansprüche, **gekennzeichnet durch** angeformte Endanschläge (72), welche den Verfahrweg von Schaltschienen begrenzen.

6. Schaltdomgehäuse (5) nach einem der vorhergehenden Ansprüche, **gekennzeichnet durch** einen eingeformten Aufnahmekanal (55), welcher parallel zu der Schaltwelle (4) und/oder senkrecht zu der Erstreckungsebene der Kopplungsöffnung angeordnet und/oder ausgerichtet ist und der eine Aufnahme für ein Verriegelungsblech (48) zur Verriegelung der Schaltschienen bildet.

7. Schaltdom (1) zur Übertragung einer Schalt- und/oder Wählbewegung umfassend eine Schaltwelle (4) und ein Schaltdomgehäuse (5) nach einem der vorhergehenden Ansprüche.

8. Schaltdom (1) nach Anspruch 7, **dadurch gekennzeichnet, dass** die Schaltwelle (4) auf der Lageranordnung (11,12) fliegend und/oder mit einem frei abstehenden Ende gelagert ist.

9. Schaltdom (1) nach einem der Ansprüche 7 oder 8, **gekennzeichnet durch** eine Rastanordnung (9) zur Verrastung der Schaltwelle (4), welche in einem der Kammerbereiche angeordnet ist, und eine Kulissenanordnung (10) zur Zwangsführung der Schaltwelle (4), welche bevorzugt in dem anderen Kammerbereich angeordnet ist.

10. Schaltdom nach Anspruch 9, **dadurch gekennzeichnet, dass** die Rastanordnung (9) und/oder die Kulissenanordnung (10) und/oder ein Schaltfingerabschnitt (6) an dem frei abstehenden Ende der Schaltwelle (4) angeordnet ist.

## Claims

1. Gearshift dome housing (5) for covering and/or receiving a gearshift mechanism for a gearbox, having a bearing arrangement (11, 12) for mounting a gearshift shaft (4), such that the gearshift shaft (4) is mounted in a longitudinally displaceable and pivotable manner in the gearshift dome housing (5), having a coupling opening (31) for connecting to a housing, in particular a gearbox housing, wherein the longitudinal extent of the gearshift shaft (4) is in the same direction as the areal extent of the coupling opening (31), wherein the gearshift dome housing (5) has a first (7) and a second chamber region (8) into which the gearshift shaft (4) extends, wherein a first bearing unit (12), as part of the bearing arrangement, is positioned between the first and second chamber regions (7, 8), wherein
- an inner bearing receptacle (14) for the first bearing unit (12) and/or the first bearing unit is formed integrally on the gearshift dome housing (5), wherein
- the inner bearing receptacle (14) and/or the first bearing unit (12) comprises a first passage opening in a subsection of the gearshift dome housing (5), wherein
- the subsection is in the form of a web (15) which divides the first and second chamber regions (7, 8) and which is formed on the inner side of the gearshift dome housing in a forming-on region, **characterized in that**
- the outer side of the gearshift dome housing has two cupolas (26, 27) corresponding to the two chamber regions (7, 8), said cupolas being divided from one another by a constriction region (25), wherein the constriction region (25) is arranged opposite the forming-on region of the web (15), and wherein
- the walls (28, 29) of the cupolas (26, 27) have a uniform wall thickness.

2. Gearshift dome housing (5) according to Claim 1, **characterized by** a second bearing unit (11) as part of the bearing arrangement, wherein the second bearing arrangement (11) and/or an outer bearing receptacle (13) for the second bearing unit (11) comprises a second passage opening which is arranged preferably in an outer wall of the gearshift dome housing (5).

3. Gearshift dome housing (5) according to Claim 2, **characterized in that** the bearing arrangement (11, 12) is formed exclusively by the first and second bearing units.

4. Gearshift dome housing (5) according to one of the preceding claims, **characterized by** a ventilation unit (34) with a ventilation duct, wherein the ventilation direction of the ventilation duct encloses an angle (alpha) with the gearshift shaft (4) of between 10° and 40°, preferably between 20° and 30°.

5. Gearshift dome housing (5) according to one of the preceding claims, **characterized by** integrally formed end stops (72) which delimit the displacement travel of gearshift rails.

6. Gearshift dome housing (5) according to one of the preceding claims, **characterized by** a receiving channel (55) formed therein, which receiving channel is arranged and/or aligned parallel to the gearshift shaft (4) and/or perpendicular to the plane of extent of the coupling opening and forms a receptacle for a locking plate (48) for locking the gearshift rails.

7. Gearshift dome (1) for transmitting a gearshift and/or gear selection movement, comprising a gearshift shaft (4) and a gearshift dome housing (5) according to one of the preceding claims.

8. Gearshift dome (1) according to Claim 7, **characterized in that** the gearshift shaft (4) is mounted on the bearing arrangement (11, 12) in an overhung manner and/or with one freely projecting end.

9. Gearshift dome (1) according to either of Claims 7 and 8, **characterized by** a detent arrangement (9) for latching the gearshift shaft (4), said detent arrangement, being arranged in one of the chamber regions, and by a slotted guide arrangement (10) for the positive guidance of the gearshift shaft (4), said slotted guide arrangement being arranged preferably in the other chamber region.

10. Gearshift dome according to Claim 9, **characterized in that** the detent arrangement (9) and/or the slotted guide arrangement (10) and/or a gearshift finger portion (6) is arranged on the freely projecting end of the gearshift shaft (4).

## Revendications

1. Boîtier de dôme de changement de vitesse (5) pour recouvrir et/ou recevoir un mécanisme de changement de vitesse pour une transmission avec un agencement de palier (11, 12) pour supporter sur palier un arbre de changement de vitesse (4), de sorte que l'arbre de changement de vitesse (4) soit monté dans le boîtier de dôme de changement de vitesse (5) de manière déplaçable en longueur et de manière pivotante, avec une ouverture d'accouplement (31) pour le raccordement à un boîtier, en particulier un boîtier de transmission, l'étendue longitudinale de l'arbre de changement de vitesse (4) étant orientée dans le même sens que l'étendue de la surface de l'ouverture d'accouplement (31), le boîtier de dôme de changement de vitesse (4) présentant une première (7) et une deuxième (8) région de chambre dans lesquelles s'étend l'arbre de changement de vitesse (4), un premier dispositif de palier (12) étant positionné en tant qu'agencement de palier entre la première et la deuxième région de chambre (7, 8),
- un logement de palier interne (14) pour le premier dispositif de palier (12) et/ou le premier dispositif de palier étant façonné d'une seule pièce sur le boîtier de dôme de changement de vitesse (5),
- le logement de palier interne (14) et/ou le premier dispositif de palier (12) comprenant une première ouverture de passage dans une portion partielle du boîtier de dôme de changement de vitesse (5),
- la portion partielle étant réalisée sous forme de nervure (15) qui sépare la première et la deuxième région de chambre (7, 8) et qui est façonnée sur le côté interne du boîtier de dôme de changement de vitesse dans une région de façonnage,
**caractérisé en ce que**
- le côté extérieur du boîtier de dôme de changement de vitesse présente deux coupoles (26, 27) correspondant aux deux régions de chambre (7, 8), qui sont séparées l'une de l'autre par une région de rétrécissement (25), la région de rétrécissement (25) étant disposée en regard de la région de façonnage de la nervure (15), et
- les parois (28, 29) des coupoles (26, 27) présentent une épaisseur de paroi unitaire.

2. Boîtier de dôme de changement de vitesse (5) selon la revendication 1, **caractérisé par** un deuxième dispositif de palier (11) en tant que partie de l'agencement de palier, le deuxième dispositif de palier (11) et/ou un logement de palier extérieur (13) pour le deuxième dispositif de palier (11) comprenant une deuxième ouverture de passage qui est disposée de préférence dans une paroi extérieure du boîtier de dôme de changement de vitesse (5).

3. Boîtier de dôme de changement de vitesse (5) selon la revendication 2, **caractérisé en ce que** l'agencement de palier (11, 12) est formé exclusivement par le premier et le deuxième dispositif de palier.

4. Boîtier de dôme de changement de vitesse (5) selon l'une quelconque des revendications précédentes, **caractérisé par** un dispositif de désaérage (34) avec un canal de désaérage, la direction de désaérage du canal de désaérage formant un angle (alpha) compris entre 10° et 40°, de préférence entre 20° et 30° avec l'arbre de changement de vitesse (4).

5. Boîtier de dôme de changement de vitesse (5) selon l'une quelconque des revendications précédentes, **caractérisé par** des butées de fin de course façonnées (72) qui limitent la course de déplacement de tiges de commande.

6. Boîtier de dôme de changement de vitesse (5) selon l'une quelconque des revendications précédentes, **caractérisé par** un canal de réception formé en retrait (55) qui est disposé et/ou orienté parallèlement à l'arbre de changement de vitesse (4) et/ou perpendiculairement au plan d'étendue de l'ouverture d'accouplement et qui forme un logement pour une tôle de verrouillage (48) pour verrouilleur les tiges de commande.

7. Dôme de changement de vitesse (1) pour le transfert d'un mouvement de changement de vitesse et/ou de sélection comprenant un arbre de changement de vitesse (4) et un boîtier de dôme de changement de vitesse (5) selon l'une quelconque des revendications précédentes.

8. Dôme de changement de vitesse (1) selon la revendication 7, **caractérisé en ce que** l'arbre de changement de vitesse (4) est monté flottant sur l'agencement de palier (11, 12) et/ou est monté avec une extrémité saillant librement.

9. Dôme de changement de vitesse (1) selon l'une quelconque des revendications 7 ou 8, **caractérisé par** un agencement d'encliquetage (9) pour l'encliquetage de l'arbre de changement de vitesse (4), qui est disposé dans l'une des régions de chambre, et un agencement de coulisse (10) pour le guidage forcé de l'arbre de changement de vitesse (4), qui est disposé de préférence dans l'autre région de chambre.

10. Dôme de changement de vitesse selon la revendication 9, **caractérisé en ce que** l'agencement d'encliquetage (9) et/ou l'agencement de coulisse (10) et/ou une portion de doigt de changement de vitesse (6) sont disposés sur l'extrémité saillant librement de l'arbre de changement de vitesse (4).
